# FASCICULE DE BREVET EUROPEEN

(11) **EP 0 542 611 B1**
(45) Date de publication et mention de la délivrance du brevet: **25.10.1995**
(21) Numéro de dépôt: 92403016.6
(22) Date de dépôt: 09.11.1992
(51) Int. Cl.: F02K 1/76

(54) **Installation de sécurité inverseur de poussée à portes équipant un avion**
Sicherheitsvorrichtung für eine Schubumkehrvorrichtung eines Flugtriebwerks
Safety device for a thrust reverser of an aircraft jet engine

(30) Priorité: 14.11.1991 FR 9114011
(43) Date de publication de la demande: 19.05.1993
(73) Titulaire: SOCIETE DE CONSTRUCTION DES AVIONS HUREL-DUBOIS, F-92360 Meudon la Forêt (FR)
(72) Inventeur: Vancon, Philippe, F-78120 La Celle Saint-Cloud (FR); Standisch, Robert, F-78120 Gazeran (FR)
(74) Mandataire: Sauvage, Renée

(56) Documents cités:
- GB-A- 759 891
- GB-A- 921 917
- GB-A- 2 154 291
- US-A- 3 576 337
- US-A- 3 600 023

## Description

La présente invention concerne une installation de sécurité destinée à équiper les inverseurs de poussée à portes pour moteur d'avion du type à réaction.

Les inverseurs de poussée dont sont équipés certains types de moteur d'avions ont pour but d'assurer le ralentissement de l'avion lors de l'atterrissage en provoquant la déviation du jet moteur vers l'avant. Leur mise en oeuvre est toujours commandée volontairement lors de la manoeuvre d'atterrissage et doit être interdite dans les phases de vol, car tout déploiement intempestif des portes de l'inverseur ferait courir des risques considérables à l'avion.

C'est pourquoi les inverseurs de poussée à portes sont équipés d'installations de sécurité assurant un verrouillage efficace des portes en position escamotée lorsque l'appareil est en vol. De préférence, pour chaque porte, on dispose d'au moins un verrou de porte assurant le verrouillage de la porte en position fermée et d'au moins un vérin d'actionnement de porte, vérin qui est soumis à un moyen adapté à le verrouiller dans la position qu'il occupe lorsque la porte est fermée. Un circuit d'actionnement, par exemple un circuit électro-hydraulique, assure, pour permettre l'ouverture des portes, la manoeuvre, en vue de leur déverrouillage et selon une séquence prédéterminée, tout d'abord du verrou de porte puis des moyens de verrouillage du vérin d'actionnement de porte. Il peut être en outre prévu un mécanisme d'interdiction de déverrouillage du verrou de porte.

Ainsi, GB-A-759 891 décrit un système dans lequel des moyens d'interdiction de déverrouillage constitués par des crochets sont manoeuvrés sous l'effet de l'actionnement des vérins d'ouverture des portes.

La présente invention propose de renforcer la sécurité en prévoyant que le mécanisme d'interdiction de déverrouillage du verrou de porte soit associé à un circuit de commande indépendant du circuit d'actionnement assurant la manoeuvre du verrou de porte et du moyen de verrouillage du vérin, lequel circuit de commande agit positivement sur ledit mécanisme (26 ; 260) d'interdiction de déverrouillage aussi bien pour déplacer et maintenir ce dernier dans la position d'interdiction de déverrouillage du verrou de porte que dans une position permettant le déverrouillage dudit verrou.

Dans les installations de sécurité visées par l'invention, le verrou de porte monté sur la porte comporte une pièce basculante qui coopère avec une pièce fixe de la structure de la nacelle moteur, pièce basculante susceptible de se déplacer entre une position verrouillée et une position ouverte, l'amenée et le maintien de la pièce basculante dans sa position verrouillée étant réalisés par un levier de verrouillage pivotant autour d'un axe fixe et actionné par le piston d'un vérin, ladite pièce basculante, ledit levier de verrouillage et ledit piston de vérin se déplaçant dans un même plan et constituant une chaîne cinématique.

Avec une telle configuration, le mécanisme d'interdiction de déverrouillage selon l'invention est constitué par au moins une pièce mobile susceptible de se déplacer entre, d'une part, une position d'interdiction dans laquelle elle vient en butée avec l'un des constituants de ladite chaîne cinématique qu'elle empêche de se mouvoir, en bloquant ainsi toute la chaîne cinématique tant que n'est pas actionné le circuit de commande du mécanisme d'interdiction auquel elle est associée et, d'autre part, une position de retrait obtenue sous l'action dudit circuit de commande et dans laquelle elle laisse les constituants de ladite chaîne cinématique libres de se mouvoir.

Selon une forme de réalisation préférée de l'invention, ladite pièce mobile, telle qu'un doigt, est commandée électriquement, indépendamment du circuit d'actionnement de la chaîne cinématique. Le doigt mobile peut être situé dans le même plan que la chaîne cinématique ou transversalement à celle-ci. Dans ce dernier cas, afin de disposer d'une fiabilité totale du mécanisme d'interdiction, on utilise de préférence deux électro-aimants, situés de part et d'autre du plan cinématique, et actionnant deux doigts d'interdiction situés dans le prolongement l'un de l'autre.

Le mécanisme d'interdiction coopérera avantageusement avec le levier de déverrouillage et plus spécialement avec un bras du levier situé à l'opposé de la pièce basculante par rapport à l'axe de pivotement du levier.

On notera, par ailleurs, qu'en général chaque porte d'inverseur comporte plusieurs installations de sécurité montées en série sur un même circuit d'actionnement électro-hydraulique. Lorsqu'on se trouve en présence d'une telle configuration, il pourra être avantageux, notamment pour des questions de poids, d'équiper seulement la première installation de sécurité de la série d'un mécanisme tel que décrit plus haut. En effet, du fait du montage en série, l'interdiction d'ouverture de la première installation de sécurité empêche la manoeuvre des autres verrous montés en série.

On décrira à présent, à titre d'exemples non limitatifs, deux formes de réalisation de l'invention en référence aux dessins annexés dans lesquels :
- la figure 1 est une coupe schématique d'une installation de sécurité selon une première forme de réalisation de l'invention,
- la figure 2 est une vue en coupe selon la ligne BB de la figure 1, et
- la figure 3 est une vue schématique d'une seconde forme de réalisation de l'invention.

Dans les figures, on a schématisé en 1 la structure fixe de la nacelle du moteur (non représentée) et en 2 une partie de la porte d'inverseur. Chaque porte d'inverseur peut comporter plusieurs installations de sécurité montées en série.

L'installation de sécurité montée sur la structure 1 présente un carter 3 ouvert sur sa face avant en 4 pour le passage d'une pièce basculante 5 en forme de crochet appartenant à un verrou destinée à coopérer avec une partie de la porte 2, pour le verrouillage de celle-ci. La pièce 5 est montée basculante autour d'un axe fixe 7 et sollicitée dans sa position ouverte, représentée en trait interrompu en 5′, par un ressort 8 enroulé autour de l'axe 7.

Un levier de verrouillage 9, monté pivotant autour d'un axe fixe 10, présente un bras 11 terminé par un galet 12 et destiné à coopérer avec la pièce 5 du verrou, et un bras 13, opposé au bras 11 par rapport à l'axe 10, qui coopère avec l'extrémité du piston 15 d'un vérin hydraulique 16 logé dans le carter 3.

Un ressort 17, enroulé autour de l'axe 10, sollicite le levier de verrouillage 9 dans sa position représentée en train plein, un butée 14 limitant le pivotement du levier.

Le vérin 16 est monté sur un circuit électro-hydraulique (non représenté), éventuellement en série avec d'autres installations de sécurité dont peut être équipée la porte, et la sortie du piston 15 provoque le basculement du levier 9 dans le sens de la flèche F, ce qui débloque la pièce 5 du verrou qui peut alors s'ouvrir pour permettre l'ouverture de la porte sous l'effet d'un vérin de commande, non représenté, agissant directement sur la porte. Ce vérin de porte, comme on l'a déjà indiqué, comporte lui-même un moyen de verrouillage (non représenté) monté sur le même circuit d'actionnement que le vérin 16.

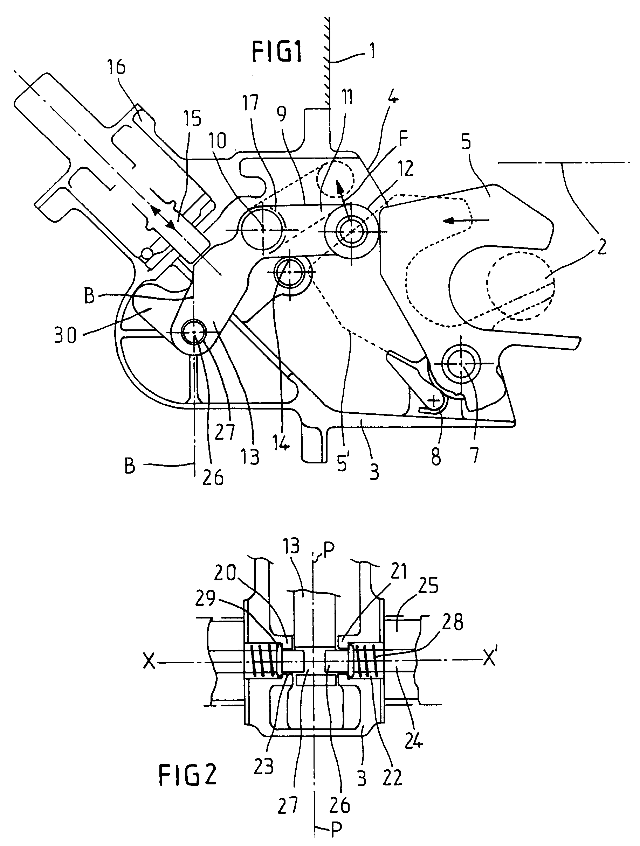

On notera que la pièce 5 du verrou, le levier 9 et le piston 15 du vérin 16 constituent une chaîne cinématique dont les organes sont situés dans un même plan P (figure 2).

On décrira à présent 'plus spécifiquement la première forme de réalisation du mécanisme d'interdiction des figures 1 et 2.

Le carter 3 (voir figure 2) présente deux protubérances 20-21 intérieures alignées selon un axe commun X-X′ tranversal au plan P de la chaîne cinématique. Les parois du carter sont percées de logements 22 prolongés, du côté intérieur, par des orifices 23 de plus petit diamètre. Dans chacun des logements 22 est montée la tige 24 d'un noyau d'électro-aimant 25 fixé à l'extérieur de chaque côté du carter. Les extrémités 26 des tiges 24 dépassent à l'intérieur du carter 3 pour se loger dans une ouverture 27 pratiquée dans l'extrémité du bras 13 du levier 9. Les tiges 24 sont sollicitées dans la position de la figure 2 par des ressorts 28 montés autour desdites tiges 24 dans les logements 22 et agissant entre le corps 25 de l'électro-aimant et une collerette 29 de butée.

Les électro-aimants 25 sont commandés électriquement indépendamment de l'ensemble des constituants de la chaîne cinématique et leur excitation entraîne le retrait de l'extrémité 26 des tiges 24 hors de l'ouverture 27 du levier qui se trouve ainsi libéré, permettant le bon fonctionnement du piston 15.

On notera que le bras 13 du levier 9 est prolongé par une oreille 30 qui, quand le levier 9 est basculé dans la position de libération du verrou 5, sert de butée aux tiges 24 lorsque les électro-aimants 25 sont désexcités, afin de permettre au levier 9 de revenir aisément dans sa position en trait continu sous l'effet de son ressort 17.

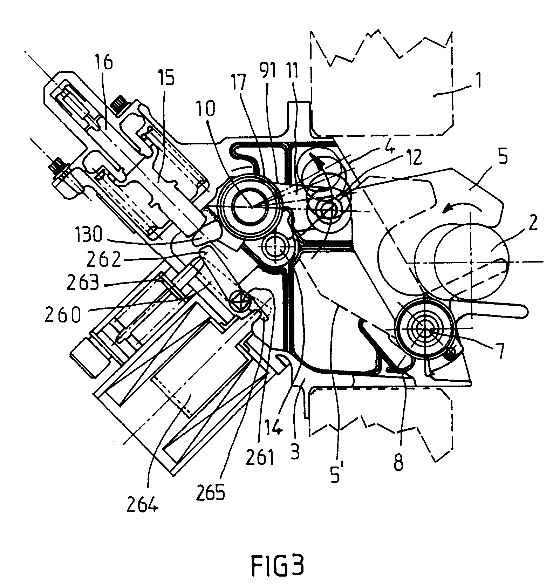

Dans la variante de réalisation de la figure 3, on a indiqué les organes similaires à ceux de la première forme de réalisation par les mêmes chiffres de référence. On se contentera donc de décrire les éléments modifiés.

Pour l'essentiel, dans la forme de réalisation de la figure 3, la pièce mobile 260 est constituée par un levier articulé autour d'un axe 261 et située dans le plan de la chaîne cinématique constituée par le levier de verrouillage 91, la pièce basculante 5 et le piston 15. L'un des bras 262 de la pièce mobile 260 est sollicité dans la position en trait plein par un organe à ressort 263, pour venir en contact avec le bras 130 du levier 91. Pour libérer le levier de déverrouillage 91, un électro-aimant 264 commande le basculement de la pièce 260 vers sa position en traits interrompus en agissant sur le second bras 265 de la pièce 260 opposé au bras 262 par rapport à l'axe 261.

## Revendications

1. Installation de sécurité pour inverseur de poussée à portes monté sur un moteur d'avion du type à réaction comportant, pour chaque porte (2) : au moins un verrou de porte assurant le verrouillage de la porte en position fermée ; au moins un vérin d'actionnement de porte, vérin qui est soumis à un moyen adapté à le verrouiller dans la position qu'il occupe lorsque la porte est fermée ; au moins un circuit d'actionnement assurant, pour permettre l'ouverture de la porte (2), la manoeuvre, en vue de leur déverrouillage et selon une séquence prédéterminée, tout d'abord du verrou de porte, puis du moyen de verrouillage du vérin d'actionnement de porte ; ladite installation comportant en outre un mécanisme (26 ; 260) d'interdiction de déverrouillage du verrou de porte, caractérisée en ce que ce mécanisme (26 ; 260) est associé à un circuit de commande (25 ; 264) indépendant dudit circuit d'actionnement et agissant positivement sur ledit mécanisme (26 ; 260) d'interdiction de déverrouillage aussi bien pour déplacer et maintenir ce dernier dans la position d'interdiction de déverrouillage du verrou de porte (2) que dans une position permettant le déverrouillage dudit verrou.

2. Installation de sécurité selon la revendication 1, dans laquelle le verrou de porte comporte une pièce basculante (5) susceptible de se déplacer entre une position verrouillée et une position ouverte, l'amenée et le maintien de la pièce basculante (5) dans sa position verrouillée étant réalisés par un levier de verrouillage (9 ; 91) pivotant autour d'un axe fixe (7 ; 261) et actionné par le piston (15) d'un vérin (16), ladite pièce basculante (5), ledit levier de verrouillage (9 ; 91) et ledit piston (15) de vérin se déplaçant dans un même plan (P) et constituant une chaîne cinématique, caractérisée en ce que le mécanisme d'interdiction de déverrouillage est constitué par au moins une pièce mobile (24 ; 260) susceptible de se déplacer entre, d'une part, une position d'interdiction dans laquelle elle vient en butée avec l'un des constituants (5, 9 ou 91, 15) de ladite chaîne cinématique qu'elle empêche de se mouvoir, en bloquant ainsi toute la chaîne cinématique tant que n'est pas actionné le circuit de commande (25 ; 264) dudit mécanisme d'interdiction auquel elle est associée et, d'autre part, une position de retrait obtenue sous l'action dudit circuit de commande (25 ; 264) et dans laquelle elle laisse les constituants (5, 9 ou 91, 15) de la chaîne cinématique libres de se mouvoir.

3. Installation de sécurité selon la revendication 2, caractérisée en ce que ladite pièce mobile (24 ; 260) est commandée électriquement indépendamment du circuit d'actionnement (25 ; 264) de ladite chaîne cinématique (5, 9 ou 91, 15).

4. Installation de sécurité selon la revendication 2 ou 3, caractérisée en ce que le mécanisme (24 ; 260) d'interdiction de déverrouillage coopère avec ledit levier de verrouillage (9 ; 91).

5. Installation de sécurité selon la revendication 3 ou 4, caractérisée en ce que le mécanisme d'interdiction de déverrouillage est constitué de deux électro-aimants (25) situés de part et d'autre du plan (P) dans lequel est située la chaîne cinématique (5, 9, 15) et, comme pièces mobiles, de deux doigts d'interdiction (26) situés dans le prolongement l'un de l'autre.

6. Installation de sécurité selon l'une quelconque des revendications 3 à 5, caractérisée en ce que la ou les pièces mobiles (24) du mécanisme d'interdiction de déverrouillage coopèrent avec un logement (27) traversant un bras (13) dudit levier de verrouillage (9) situé à l'opposé de ladite pièce basculante (5) par rapport à l'axe de pivotement (10) dudit levier.

7. Installation de sécurité selon la revendication 6, caractérisée en ce que ledit bras (13) du levier de verrouillage (9) est prolongé, au-delà du logement (27) traversant, par une oreille (30) coopérant avec la ou les pièces mobiles (24) du mécanisme d'interdiction de déverrouillage quand celle(s)-ci est(sont) en position de retrait et que le levier de verrouillage (9) est pivoté dans la position autorisant l'ouverture du verrou de porte.

8. Installation de sécurité selon l'une quelconque des revendications 2 à 4, caractérisée en ce que ladite pièce mobile (260) est constituée par un levier basculant situé dans le même plan (P) que ladite chaîne cinématique (5, 91, 15).

9. Ensemble comprenant une pluralité d'installations de sécurité montées en série sur un même circuit d'actionnement et destinées à équiper une porte d'inverseur de poussée monté sur un moteur d'avion du type à réaction, caractérisé en ce que seule la première installation de sécurité de la série est conforme à l'une quelconque des revendications 1 à 8.

## Claims

1. Safety installation for a thrust reverser with doors mounted on a jet-type aircraft engine comprising, for each door (2) : at least one door lock ensuring locking of the door in the closed position ; at least one door actuating jack, which jack is subjected to a mean suitable for locking it in the position which it occupies when the door is closed ; at least one actuating circuit for allowing opening of the door (2), providing the control, with a view to their unlocking in a predetermined sequence, first of all of the door lock, then of the locking means of the door actuating jack ; the said installation further comprising an unlocking prevention mechanism (26 ; 260) for the door lock, characterised in that this mechanism (26 ; 260) is connected to a control circuit (25 ; 264) which is independent of the said actuating circuit and acts positively on the said unlocking prevention mechanism (26 ; 260) both to move the latter into the unlocking prevention position for the door (2) lock and hold it there, and to move it into a position allowing unlocking of the said lock and hold it there.

2. Safety installation according to Claim 1, in which the door lock comprises a tilting part (5) able to move between a locked position and an open position, the tilting part (5) being brought into its locked position and held there by a locking lever (9 ; 91) pivoting around a fixed (7 ; 261) shaft and actuated by the piston (15) of a jack (16), the said tilting part (5), the said locking lever (9 ; 91) and the said jack piston (15) moving in the same plane (P) and constituting a kinematic linkage, characterised in that the unlocking prevention mechanism is constituted by at least one movable part (24 ; 260) capable of moving between, on the one hand, a prevention position in which it comes to abut with one of the components (5, 9 or 91) of the said kinematic linkage which it prevents from moving, therefore immobilising the whole kinematic linkage as long as the control circuit (25 ; 264) for the said prevention mechanism, to which it is connected, is not actuated and, on the other hand, a withdrawn position brought about by the action of the said control circuit (25 ; 264) and in which it leaves the components (5, 9 or 91, 15) of the kinematic linkage free to move.

3. Safety installation according to Claim 2, characterised in that said movable part (24 ; 260) is electrically controlled independently of the actuation circuit (25 ; 264) of the said kinematic linkage (5, 9 or 91, 15).

4. Safety installation according to Claim 2 or 3, characterised in that the unlocking prevention mechanism (24 ; 260) interacts with the said locking lever (9 ; 91) .

5. Safety installation according to Claim 3, characterised in that the unlocking prevention mechanism is constituted by two electromagnets (25) situated on either side of the plane (P) in which the kinematic linkage (5, 9, 15) is situated and, as movable parts, by two prevention fingers (26) situated in the extension of each other.

6. Safety installation according to anyone of Claims 3 to 5, characterised in that movable part or parts (24) of the unlocking prevention mechanism interacts with a housing (27) passing through an arm (13) of the said locking lever (9) situated at the opposite end of the said tilting part (5) with respect to the pivoting shaft (10) of the said lever.

7. Safety installation according to Claim 6, characterised in that the said arm (13) of the locking lever (9) is extended, beyond the through housing (27), by a lug (30) interacting with the movable part or parts (24) of the unlocking prevention mechanism when the latter is or are in the withdrawn position and that the locking lever (9) is pivoted in the position allowing opening of the door lock.

8. Safety installation according to anyone of Claims 2 to 4, characterised in that said movable part (260) is constituted by a tilting lever situated in the same plane (P) as the kinematic linkage (5, 91, 15).

9. Assembly comprising a plurality of safety installation mounted in series on the same actuating circuit and intended to be fitted to a thrust reverser door mounted on a jet-type aircraft engine, characterised in that only the first safety installation of the series is in accordance to anyone of Claims 1 to 8.

## Patentansprüche

1. Sicherheitsanlage für eine an einem Flugzeug-Strahltriebwerk montierte Schubumkehrvorrichtung mit Klappen, die für jede Klappe (2) mindestens einen Klappenriegel, der die Verriegelung der Klappe in geschlossener Stellung gewährleistet, mindestens einen Klappenbetätigungszylinder, der der Einwirkung eines Mittels ausgesetzt ist, das ihn in der Stellung, die er bei geschlossener Klappe einnimmt, verriegeln kann, und mindestens einen Betätigungskreis aufweist, der, um die Öffnung der Klappe (2) zu gestatten, die Manövrierung zunächst des Klappenriegels und dann des Mittels zur Verriegelung des Klappenbetätigungszylinders zum Zweck ihrer Entriegelung und in einer vorbestimmten Sequenz gewährleistet, wobei diese Anlage außerdem einen Mechanismus (26, 260) zur Sperrung der Entriegelung des Klappenriegels aufweist, dadurch gekennzeichnet, daß dieser Mechanismus (26, 260) einem Steuerkreis (25, 264) zugeordnet ist, der von diesem Betätigungskreis unabhängig ist und auf diesen Mechanismus (26, 260) zur Sperrung der Entriegelung positiv einwirkt, um diesen sowohl in die Stellung der Sperrung der Entriegelung des Klappenriegels (2) als auch in eine die Entriegelung dieses Riegels gestattende Stellung zu bewegen und in dieser zu halten.

2. Sicherheitsanlage nach Anspruch 1, in welcher der Klappenriegel ein schwenkbares Teil (5) aufweist, das sich zwischen einer verriegelten Stellung und einer offenen Stellung bewegen kann, wobei die Einführung des schwenkbaren Teils (5) in seine verriegelte Stellung und sein Halt in dieser durch einen Verriegelungshebel (9; 91) erreicht werden, der sich um eine feststehende Achse (7; 261) dreht und durch den Kolben (15) eines Arbeitszylinders (16) betätigt ist, wobei dieses schwenkbare Teil (5), dieser Verriegelungshebel (9; 91) und dieser Arbeitszylinderkolben (15) sich in ein und der selben Ebene (P) bewegen und eine kinematische Kette bilden, dadurch gekennzeichnet, daß der Mechanismus zur Sperrung der Entriegelung aus mindestens einem beweglichen Teil (24; 260) besteht, das sich bewegen kann zwischen einerseits einer Sperrstellung, in der es an einem der Elemente (5, 9 oder 91, 15) dieser kinematischen Kette in Anschlag kommt, dessen Bewegung es verhindert, indem es so die gesamte kinematische Kette blockiert, solange der Steuerkreis (25; 264) dieses Sperrmechanismus, dem es zugeordnet ist, nicht betätigt ist, und andererseits einer weggerückten Stellung, die durch Einwirkung dieses Steuerkreises (25; 264) erreicht wird und in der es die Bewegung der Elemente (5, 9 oder 91, 15) der kinematischen Kette frei zuläßt.

3. Sicherheitsanlage nach Anspruch 2, dadurch gekennzeichnet, daß dieses bewegliche Teil (24; 260) elektrisch unabhängig vom Betätigungskreis (25; 264) dieser kinematischen Kette (5, 9 oder 91, 15) gesteuert wird.

4. Sicherheitsanlage nach Anspruch 2 oder 3, dadurch gekennzeichnet, daß der Mechanismus (24; 260) zur Sperrung der Entriegelung mit diesem Verriegelungshebel (9; 91) zusammenwirkt.

5. Sicherheitsanlage nach Anspruch 3 oder 4, dadurch gekennzeichnet, daß der Mechanismus zur Sperrung der Entriegelung aus zwei Elektromagneten (25) , die zu beiden Seiten der Ebene (P) angeordnet sind, in der die kinematische Kette (5, 9, 15) liegt, und aus zwei Sperrdaumen (26) als bewegliche Teile besteht, die in der gegenseitigen Verlängerung liegen.

6. Sicherheitsanlage nach einem der Ansprüche 3 bis 5, dadurch gekennzeichnet, daß der oder die beweglichen Teile (24) des Mechanismus zur Sperrung der Entriegelung mit einer Aufnahme (27) zusammenwirken, die einen Arm (13) dieses Verriegelungshebels (9) durchquert, die bezüglich der Drehachse (10) dieses Hebels entgegengesetzt zu diesem verschwenkbaren Teil (5) angeordnet ist.

7. Sicherheitsanlage nach Anspruch 6,
dadurch gekennzeichnet, daß dieser Arm (13) des Verriegelungshebels (9) über die durchquerende Aufnahme (27) hinaus durch einen Fortsatz (30) verlängert ist, der mit dem oder den beweglichen Teilen (24) des Mechanismus zur Sperrung der Entriegelung zusammenwirkt, wenn dieses bzw. diese in der weggerückten Stellung sind und der Verriegelungshebel (9) in die Stellung geschwenkt ist, die die Öffnung des Klappenriegels zuläßt.

8. Sicherheitsanlage nach einem der Ansprüche 2 bis 4, dadurch gekennzeichnet, daß dieses bewegliche Teil (260) aus einem schwenkbaren Hebel besteht, der in derselben Ebene (P) wie diese kinematische Kette (5, 91, 15) gelegen ist.

9. Einheit bestehend aus einer Vielzahl von Sicherheitsanlagen, die in einem gemeinsamen Betätigungskreis in Reihe geschaltet sind und dazu bestimmt sind, eine an einem Flugzeug-Strahltriebwerk montierte Schubumkehrklappe auszurüsten, dadurch gekennzeichnet, daß nur die erste Sicherheitsanlage der Reihe gemäß einem der Ansprüche 1 bis 8 ausgebildet ist.
